# EUROPEAN PATENT SPECIFICATION

(11) **EP 2 737 738 B1**
(45) Date of publication and mention of the grant of the patent: **20.12.2023**
(21) Application number: 12819907.2
(22) Date of filing: 24.07.2012
(51) Int. Cl.: H04W 8/20, H04W 92/18

(54) **METHOD AND APPARATUS FOR ACCESSING MULTIPLE SIM CREDENTIALS BY WAY OF A PROXY SIM CARD**
VERFAHREN UND VORRICHTUNG ZUM ZUGRIFF AUF MULTI-SIM-BERECHTIGUNGSNACHWEISE ÜBER EINE PROXY-SIM-KARTE
PROCÉDÉ ET APPAREIL POUR ACCÉDER À UNE PLURALITÉ D'AUTHENTIFIANTS SIM AU MOYEN D'UNE CARTE SIM PROXY

(30) Priority: 29.07.2011 US 201161513172 P
(43) Date of publication of application: 04.06.2014
(73) Proprietor: Nokia Technologies Oy, 02610 Espoo (FI)
(72) Inventor: BRAKENSIEK, Jörg, Mountain View, California 94041 (US); TRACTON, Kenneth, Palo Alto, California 94306 (US); JACOBSON, Quinn, Sunnyvale, California 94087 (US)
(74) Representative: Page White Farrer
(86) International application number: PCT/FI2012/050748
(87) International publication number: WO 2013/017733

(56) References cited:
- EP-A1- 1 895 790
- WO-A1-2004/002176
- WO-A1-2004/002176
- WO-A1-2006/117009
- WO-A1-2011/158207
- WO-A2-02/089449
- US-A1- 2006 098 238
- US-A1- 2006 098 238
- US-A1- 2010 311 467
- US-A1- 2010 311 467
- N B: "SIM ACCESS PROFILE, Interoperability Specification V11r00", , 18 December 2008 (2008-12-18), XP055118185, Retrieved from the Internet: URL:https://www.bluetooth.org/docman/handl ers/DownloadDoc.ashx?doc_id=158740 [retrieved on 2014-05-15]
- BLUETOOTH SPECIAL INTEREST GROUP CAR WORKING GROUP: 'SIM Access Profile Interoperability Specification' BLUETOOTH DOCUMENT, DOC. NO. SAP_SPEC, REV. 11R00 18 December 2008, XP055118185 Retrieved from the Internet: <URL:URL:https://www.bluetooth.org/Technica l/Specifications/adopted.htm>, <URL:https://www.bluetooth.org/DocMan/handl ers/DownloadDoc.ashx?doc_id=158740> [retrieved on 2012-10-26]

## Description

### BACKGROUND

Service providers and device manufacturers (e.g., wireless, cellular, etc.) are continually challenged to deliver value and convenience to consumers by, for example, providing compelling network services. Many consumers own multiple wireless devices, or would like to have multiple wireless devices. A subscriber identity module (SIM) card that has credentials is needed for these devices to operate. Conventionally, a user needs to switch one or more SIM cards from one device to another device in order for that device to operate on a designated network.

European patent application publication number EP 1,895,790 A1 relates to a communication method between a handset device, comprising a slot hosting a first IC Card, and at least a second IC Card, the method including a plurality of commands based on a conventional handset device-IC card interface, intended to drive a communication between the first IC Card and the handset device; the method comprises the following steps: providing a second device, comprising at least a slot for hosting the at least second IC Card; providing the first IC Card and the at least second IC Card and/or the second device with a wireless personal interface, supporting a wireless communication; inserting the at least second IC Card inside the at least a slot, a communication between the handset device and the at least second IC Card being driven by forwarding a command received by the first IC Card on the conventional handset device/IC Card interface to the wireless personal interface.

United States patent application publication number US 2010/311467 A1 relates to a system for providing a remote subscriber identity card to a mobile station is provided. The system includes a subscriber identity card, a Bluetooth module and a controller. The Bluetooth module establishes a Bluetooth connection to the mobile station. The controller accesses the subscriber identity card to obtain identity information and provides the obtained information to the mobile station via the Bluetooth connection such that the mobile station camps on a cell according to the obtained information.

N B: "SIM ACCESS PROFILE: Interoperability Specification V11r00" is a communication protocol for SIM Access Profile defines the protocols and procedures for accessing a GSM SIM card, a UICC card or a R-UIM card via a Bluetooth link.

United States patent application publication number US 2006/098238 A1 relates to a method and system for coupling a first device to a second device having a module containing subscriber-related data therein, the data being usable and accessible by a user of the first device, wherein the activation of the usability and accessibility of the data is tied to "on-demand" user interaction in the first device in the form of an initiation of a communications session, such as making a phone call or data connection, or opening a communicator, or sending an email, or other suitable communications session.

### SOME EXAMPLE EMBODIMENTS

Therefore, there is a need for an approach for accessing multiple SIM credentials by way of a proxy SIM card.

The present invention is defined by the appended independent claims. Certain more specific aspects are defined by the dependent claims.

### BRIEF DESCRIPTION OF THE DRAWINGS

The embodiments of the invention are illustrated by way of example, and not by way of limitation, in the figures of the accompanying drawings:
FIG. 1 is a diagram of a system capable of accessing multiple SIM credentials by way of a proxy SIM card, according to one embodiment;
FIG. 2 is a diagram of the components of a SIM management platform, according to one embodiment;
FIG. 3 is a flowchart of a process for accessing multiple SIM credentials by way of a proxy SIM card, according to one embodiment;
FIG. 4 is a diagram of a user interface utilized in the processes of FIG. 3, according to one embodiment;
FIG. 5 is a diagram of a user interface for selecting any of the detected SIM cards within range of the proxy SIM card, according to one embodiment;
FIG. 6 is an example primary device that is not a fully featured mobile device, according to one embodiment;
FIG. 7 is a diagram of hardware that can be used to implement an embodiment of the invention;
FIG. 8 is a diagram of a chip set that can be used to implement an embodiment of the invention; and
FIG. 9 is a diagram of a mobile terminal (e.g., handset) that can be used to implement an embodiment of the invention.

### DESCRIPTION OF SOME EMBODIMENTS

Examples of a method, apparatus, and computer program for accessing multiple SIM credentials by way of a proxy SIM card are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

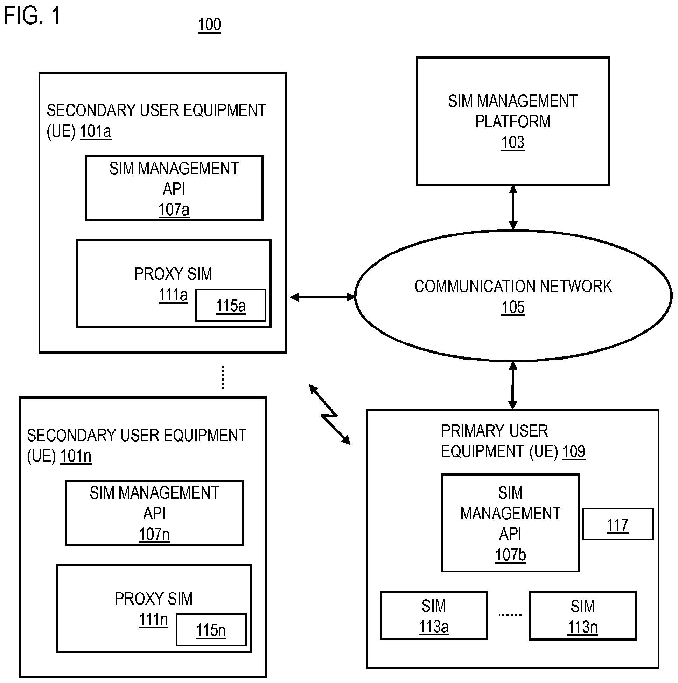

FIG. 1 is a diagram of a system capable of accessing multiple SIM credentials by way of a proxy SIM card, according to one embodiment. This system relates to operator run wireless networks, like GSM, where the access to the network is granted only if the end-customer has an ongoing business relationship (i.e. maintained by way of a SIM card) with one or more wireless network operators. A mobile device may be able to support one or more SIM cards. SIM cards have a specified physical size and interface, which make them independent of the mobile device. SIM cards contain end-customer credentials of his/her business relationship. A mobile device must access the SIM card in order to connect the phone to a wireless network. A SIM card allows only one mobile device to access a wireless network at any given point in time. While a SIM is generally described as being a SIM card, it should be understood that any SIM "card" discussed throughout this discussion may a be soft subscriber identity module.

Having a physical SIM card that contains the business relationship credentials with a given operator has two main disadvantages. First, if a user owns multiple devices, which allow for network access, the user must either have a contract which gives the user multiple SIM cards for the same account and manually manage which SIM card is currently connected to the network, or he/she must remove the SIM card from one device and put it into the other device. Second, a phone manufacturer must provision multiple physical SIM card slots in a mobile device to support two or more SIM cards. This specifically limits use of traditional single SIM devices or requires expensive re-engineering. Multi-SIM phones are increasingly popular in emerging markets, like India, for example.

In summary, it is difficult for a user to have multiple devices without having to continually move SIM cards, or have access to multiple SIM cards using devices that are limited to fewer SIMs than needed.

To address this problem, a system 100 of FIG. 1 introduces the capability to access multiple SIM credentials by way of a proxy SIM card. As shown in FIG. 1, the system 100 comprises secondary user equipment (UE) 101a-101n (collectively referred to as UE 101) having connectivity to a SIM management platform 103, and a primary UE 109 via a communication network 105.

The system 100 introduces proxy SIM cards 111a-111n (collectively referred to as proxy SIM card 111) that are resident within the secondary UE 101. The proxy SIM card 111 is a physical module that is the same size and has the same connections as a conventional SIM card. From a secondary UE 101 perspective, where the proxy SIM card 111 is installed, the proxy SIM card 111 behaves the same way as any conventional SIM card. The proxy SIM card 111 contains its own (local) communication stack, which is able to connect to a primary UE 109 and can exchange messages in a secure manner.

The primary UE 109 has a communication stack that can connect to the above mentioned proxy SIM card 111 and can exchange messages with it. The primary UE 109 has control over one or more SIM cards 113a-113n (collectively referred to as SIM card 113). The SIM management platform 103 is responsible for selecting the correct SIM card 113 based on a default setting, user preferences or user specific requests. The SIM management platform 103 may be resident the secondary UE 101.

Whenever the secondary UE 101 is requesting information from the proxy SIM card 111, the proxy SIM card 111 forwards that request via its own communication stack to the primary UE 109, which will request the same information from one of its own conventional SIM cards 113 and provide the response back to the requesting proxy SIM card 111. The proxy SIM card 111 will forward the received response to the secondary UE 101.

The proxy SIM card 111 and conventional SIM card 113 are located in separate devices (e.g., UE 101 and UE 109), which are in a local vicinity of one another, i.e. in local connectivity reach. The secondary UE 101 has the proxy SIM card 111. The secondary UE 101 accesses the proxy SIM card 111 the same way as any conventional SIM card such as if SIM card 113 were installed into UE 101 (i.e. the secondary UE 101 will not be able to tell, whether it has a conventional SIM card 113 or a proxy SIM card 111 in its SIM slot). The proxy SIM card 111, itself, is only a shell (acting as a proxy to a conventional SIM card 113). All interface requests that the proxy SIM card 111 receives from its interface are passed on through a local radio 115a-115n (collectively referred to as local radio 115) (e.g. Bluetooth low-energy) to the primary UE 109. The proxy SIM card may have its own local radio 115 so that the secondary UE 101's own radio system (not shown) is not used. But, the secondary UE 101's local radio, if it has one, may be use in lieu of the local radio 115.

The primary UE 109 has a conventional SIM card 113, as discussed above. The primary UE 109 has a local radio 117 that can connect to the proxy SIM card 111's radio, receive interface requests from it, and deliver responses back. Received requests are provided to the conventional SIM card 113 and the responses are responded back to the proxy SIM card 111.

The SIM management platform 103 manages requests from the primary UE 109 telephony stack and from the secondary UE 109, manages multiple (data) plans from the one conventional SIM card 113, and/or multiple conventional SIM cards 113 at the same time. From the SIM management platform 103 perspective, requests coming from the proxy SIM card 111 are indistinguishable from requests coming from the primary UE 109.

To access multiple conventional SIM cards 113, through the proxy SIM card 111, two implementations are possible. First, the SIM card selection is done on the primary device, e.g. manually by the user by way of a SIM management API 107, or via automatic settings from the SIM management platform 103. The SIM management API 107 may be any of SIM management API 107a-107n which may be resident on any of secondary UE 101 and/or primary UE 109. The secondary UE 101, in this embodiment, is booked into only one network at a time.

Second, in a case where the primary UE 109 has multiple SIM cards 113, the SIM card 113 selection is done on the secondary UE 101. The primary UE 109 provides information about the available SIM cards 113 to the secondary UE 101. In that case, the secondary UE 101 will have a SIM management API 107. The secondary UE 101, in this embodiment, can be booked into multiple networks at a time.

Because the radio range between the primary UE 109 and the secondary UE 101 are limited, the secondary UE 101 will automatically lose its credentials, as soon as the secondary UE 101 is out of range of the primary UE 109. Therefore no proxy SIM card 111 removal is needed from the secondary UE 101, in order to pass the credentials to another UE 101. The primary UE 109 loans its SIM card 113 credentials to the secondary UE 101 for a pre-defined time, so that the secondary UE 101 can operate, while being out-of-range to the primary device.

In various embodiments, the proxy SIM card 111 stores information about the current credentials and its life-time that it currently holds from the primary device. In a case where the primary device provides multiple SIM cards, the proxy SIM stores relevant information about those as well. The information stored in the proxy SIM, mirrors the available information in the primary device's SIM cards.

The user does not see any differences in experience connecting to the network, or setting up phone calls, between a secondary UE 101 that has a proxy SIM card 111 and a primary UE 109 containing a conventional SIM card 113, as long as he/she has a primary UE 109 that has the conventional SIM cards 113 in reach. In addition the user is offered dual-SIM or triple-SIM functionality even on his secondary single-SIM device that has the proxy SIM card 111, as long as the primary device stores 2 or 3 conventional SIMs, for example. The primary UE 109 may be scalable to any number of SIMs that the secondary device may have access to.

The primary UE 109 may be any device that contains conventional SIM cards 113, SIM management API 107 and the local radio 117. The primary UE 109 may be any phone, computer, server, key chain, chip, card, etc. In other words, the primary UE 109 is not required to be a fully featured mobile device, but rather simply a SIM holding device.

In embodiments, because the proxy SIM card 111 behaves the same as a conventional SIM card 113 with respect to how the secondary UE 101 interfaces with it, no changes are required to the secondary UE 101's software stack or hardware configuration. The proxy SIM card 111, as discussed above, gives the secondary UE 101 immediate access to multiple SIM cards without requiring any change to the hardware configuration, i.e. providing physical slots for them. The proxy SIM card 111 also allows users to manage network access of multiple devices, without the need to switch the one conventional SIM card 113 between them.

The proxy SIM card 111 offers improved security of data and talk time usage of a device because if the secondary UE 101 is out of reach of the primary UE 109 (e.g. stolen), it does not have access to the primary UE 109's SIM credentials anymore, and therefore does not have access to any communication network. As discussed above, the primary and secondary device must be in reach of the wireless communication mechanism used to communicate between the proxy SIM card 111 and the primary UE 109 for the proxy SIM card 111 to have access to a network that the primary device has access to.

In various embodiments, alternative or additional security measures or preferences can be implemented for allowing a pairing of the proxy SIM card 111 with the conventional SIM card 113 to allow the proxy SIM card 111 to have access to the credentials of the conventional SIM card 113. For example, context information such as a location of the secondary UE 101 and/or the primary UE 109 may be determined, and the credentials are passed based on the location. Such a limitation on the availability of the connection between the proxy SIM card 111 and the conventional SIM card 113 may be advantageous to prevent usage of a device away from home or an office, for example. Another security measure may be a limitation placed on the available pairings of a proxy SIM card 111 with a specific conventional SIM card 113. For example, a determination to pair a proxy SIM card 111 with conventional SIM card 113 may be made during manufacturing, thereby making it difficult to pair a proxy SIM card 111 with another conventional SIM card 113, or vice versa. Alternatively, or in addition to the above security measures, a determination may be made to pair the proxy SIM card 111 with the conventional SIM card 113 by way of a user input. For example, a user interface may be generated that enables a user to select a pairing of the proxy SIM card 111 with the conventional SIM card 113, and/or set any other preferences that may differ from default settings regarding the relationship between the proxy SIM card 111 and the conventional SIM card 113. Such settings may include, but not be limited to, a predetermined time that the pairing may occur or last, a location, as discussed above, or a limitation that restricts a particular user from initiating the pairing, for example. In another embodiment, the pairing may be restricted or enabled by a communication service.

By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth^{®}, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

By way of example, the secondary UE 101, SIM management platform 103 and primary UE 109 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

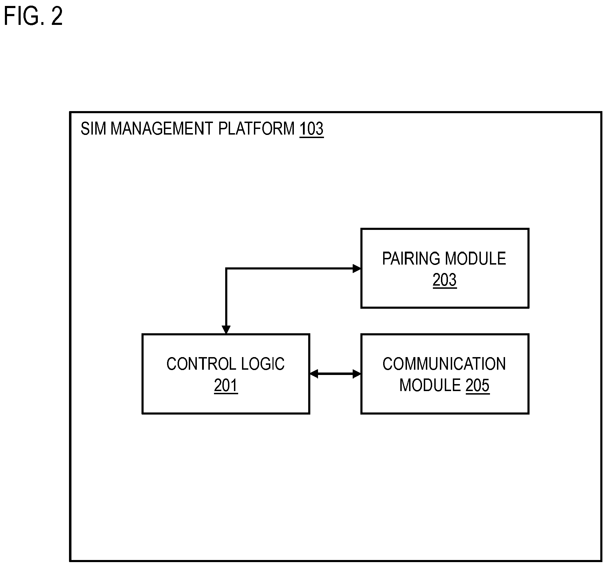

FIG. 2 is a diagram of the components of the SIM management platform 103, according to one embodiment. By way of example, the SIM management platform includes one or more components for providing accessing multiple SIM credentials by way of a proxy SIM card. It is contemplated that the functions of these components may be combined in one or more components or performed by other components of equivalent functionality. In this embodiment, the SIM management platform 103 includes a control logic 201, a pairing module 203 and a communication module 205.

The control logic 201 communicates with the pairing module 203 and the communication module 205 and manages the operations of the SIM management platform 103. The communication module 205 communications with the SIM management API 107 discussed above. When an instruction is received to pair the proxy SIM card 111 with the conventional SIM card 113, the communication module 205 relays that information to the pairing module 203 by way of the control logic 201. The pairing module establishes a connection between the proxy SIM card 111 and the conventional SIM card 113. The SIM management platform 103, as discussed above, is resident on the secondary UE 101/109.

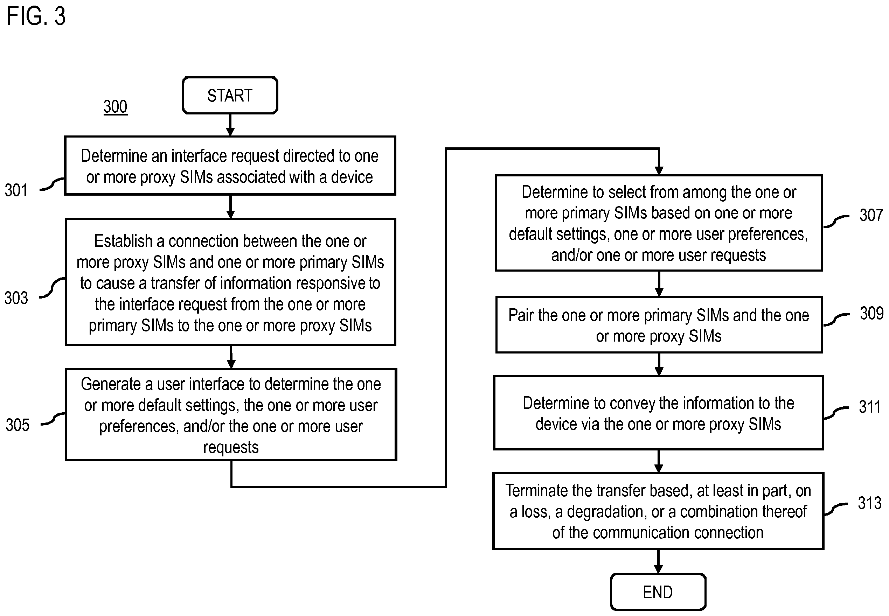

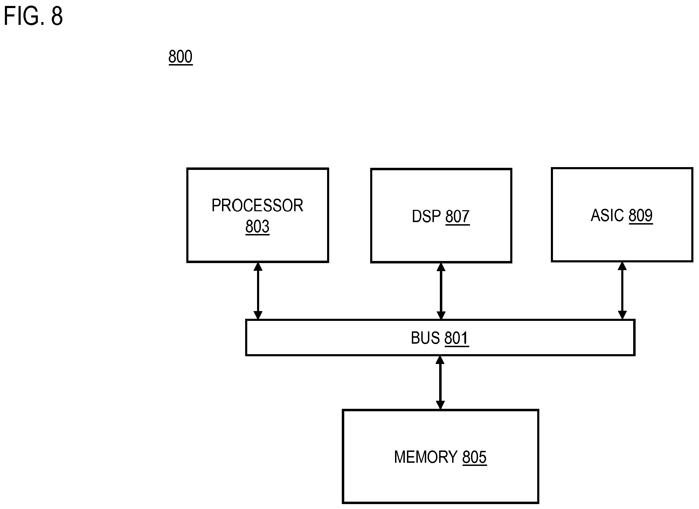

FIG. 3 is a flowchart of a process for accessing multiple SIM credentials by way of a proxy SIM card, according to one embodiment. In one embodiment, the SIM management platform 103 performs the process 300 and is implemented in, for instance, a chip set including a processor and a memory as shown in FIG. 8. In step 301, the SIM management platform 103 determines an interface request directed to one or more proxy SIMs associated with a device. The process continues to step 303 in which the SIM management platform 103 establishes a communication connection between the one or more proxy SIMs and one or more primary SIMs to cause a transfer of information, which may be from the primary SIM responsive to the interface request from the one or more primary SIMs to the one or more proxy SIMs. The one or more primary SIMs are included in at least one other device configured to establish the communication session, and the at least one other device may include, at least in part, a mobile device, a holder device, or a combination thereof. The communication connection may be established via a communication stack associated with the one or more proxy SIMs that are independent of one or more other communication stacks of the device. Then, in step 305, a user interface is generated to determine the one or more default settings, the one or more user preferences, and/or the one or more user requests. The preferences, as discussed above may include a duration or period of time in which the connection may be established. Next, in step 307, the SIM management platform 103 determines to select from among the one or more primary SIMs based on one or more default settings, one or more user preferences, and/or one or more user requests. The process continues to step 309 in which one or more primary SIMs and one or more proxy SIMs are paired. The communication connection is based, at least in part, on the pairing. Further, the pairing is performed on (a) a manufacturing of the one or more primary SIMs, the one or more proxy SIMs, or a combination thereof, (b) a provisioning of communication services associated with the one or more primary SIMs, the one or more proxy SIMs, or a combination thereof, (c) a user request, or (d) a combination thereof. Next, in step 311, the SIM management platform 103 determines to convey the information to the device via the one or more proxy SIMs. The process concludes in step 313 when the SIM management platform 103 determines to terminate the transfer, based, at least in part, on a loss, degradation, or combination thereof of the communication connection.

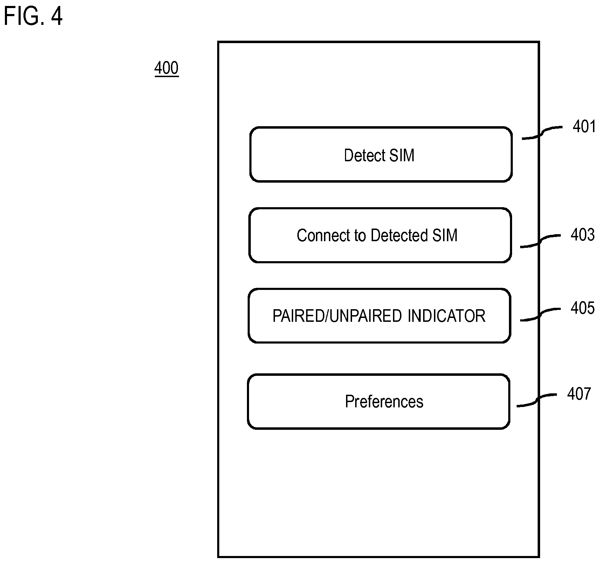

FIG. 4 is a diagram of a user interface 400 utilized in the processes of FIG. 3, according to various embodiments. The user interface 400 may be a function of the SIM management API 107 and may be viewable from any of the primary or secondary UE 101/109 and/or an external device such as a computer, or other controlling device. The user interface 400 includes selection buttons 401, 403, 405 and 407. Button 401 may be used to detect an available conventional SIM card 113 that may be within range of the secondary UE 101. The secondary UE 101 may have already detected potential conventional SIMs 113 within a certain proximity of the secondary UE 101. Button 403 may be selected to view the available conventional SIMs 113 and then provide an option to pair to the available SIM card 113. The button 405 is a paired/unpaired indicator that displays whether the device displaying the user interface 400 is paired with another device by way of the proxy and regular SIMs 111 and 113, or that other devices are paired with each other if the user interface is viewed from a controlling platform such as an external computer or other mobile device. The indicator 405 may be selected to establish a connection between the proxy SIM card 111 and the conventional SIM card 113, or to terminate a connection. Button 407 may be selected to set user preferences or change defaults with regard to the manner by which a connection is made, a timing of the connection, a location of the connection, who may establish a connection, etc. The preferences button may also be a way to set security preferences such as passwords, ranges of the connection, and the like.

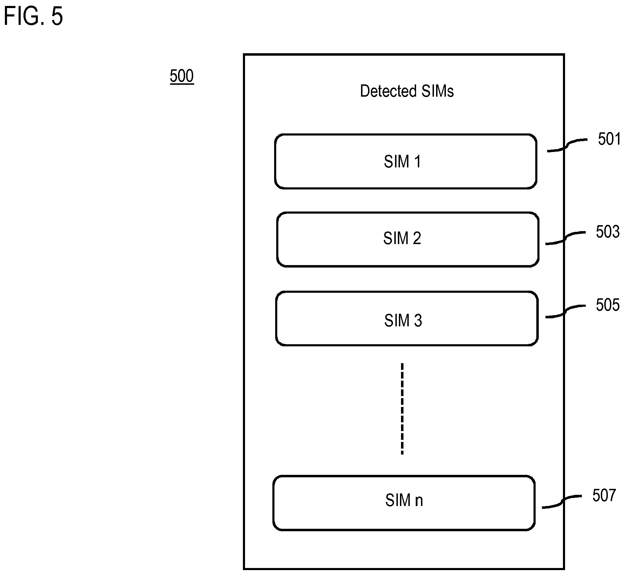

FIG. 5 is a diagram that illustrates a user interface 500 for selecting available detected conventional SIMs 1-n within range of a proxy SIM or secondary UE 101. Any of the SIM cards SIM 1-SIM n (501-507) that are detected may be previously paired or simply an option to be selected because they are capable of being paired with the proxy SIM. The user interface 500 may be part of the SIM management API 107 on a secondary UE 101, primary UE 109, or other device.

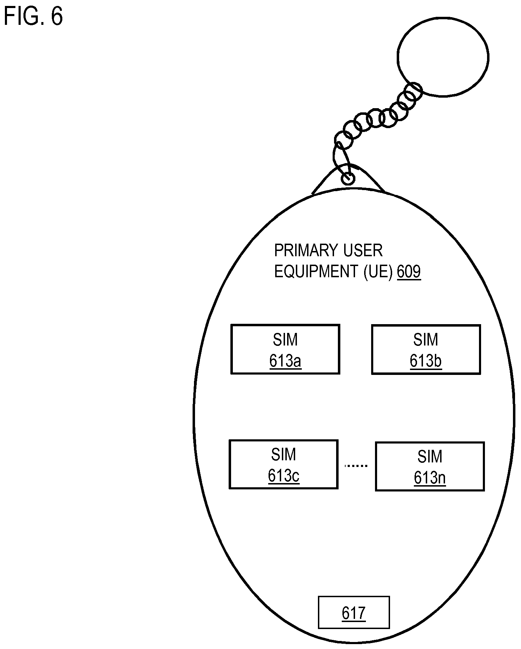

FIG. 6 is a diagram of a primary UE 609 that is an example of a primary UE that is not a fully featured mobile device. While the primary UE 109 discussed above could be any device capable of housing one or more SIM cards, such as a mobile phone, the primary UE can also be a key chain such as UE 609 illustrated in FIG. 6. The UE 609 has any number of conventional SIM cards 613a-613n (collectively referred to as SIM card 613). The primary UE 609 also has a local radio 617 for communicating with a proxy SIM card that is present in a secondary device such as UE 101. So long as the key chain primary UE 609 is within range of the secondary UE 101, the proxy SIM 111 of the secondary UE 101 will have connectivity to the same network as the conventional SIM 613, based of course, on the various default settings and user preferences discussed above. The simple primary device has an advantage of allowing connectivity of a secondary UE 101 to any number of SIM cards based on selection preferences and allows for a user to switch between networks and active devices without having to swap SIM cards, or carry around a larger fully featured mobile device. Additionally, because the primary UE 609 has the capability of housing multiple SIM cards 613, the secondary UE 101 that may only have means for housing a single SIM card, now has capabilities of a multi-SIM device without having to be fitted to support multiple SIM cards.

The processes described herein for accessing multiple SIM credentials by way of a proxy SIM card may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

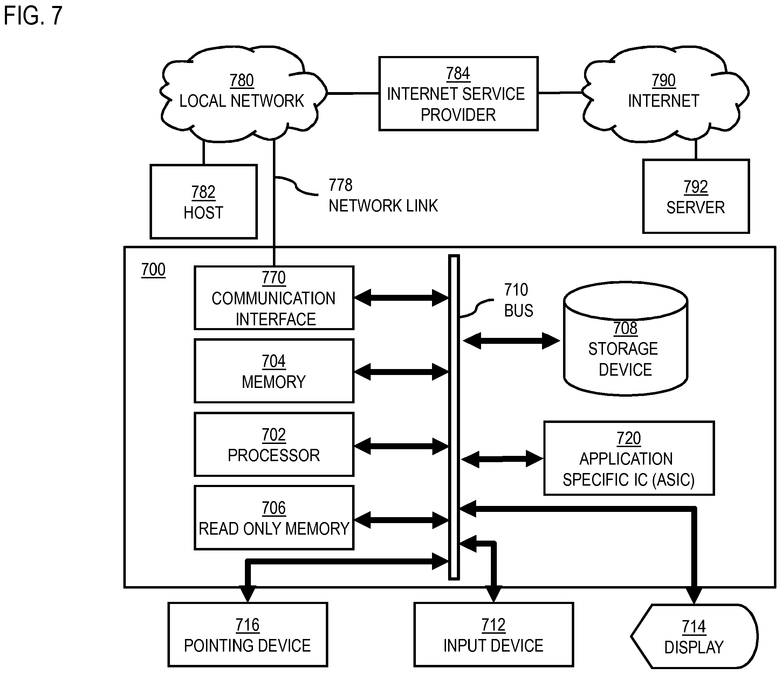

FIG. 7 illustrates a computer system 700 upon which an embodiment of the invention may be implemented. Although computer system 700 is depicted with respect to a particular device or equipment, it is contemplated that other devices or equipment (e.g., network elements, servers, etc.) within FIG. 7 can deploy the illustrated hardware and components of system 700. Computer system 700 is programmed (e.g., via computer program code or instructions) to access multiple SIM credentials by way of a proxy SIM card as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 700, or a portion thereof, constitutes a means for performing one or more steps of accessing multiple SIM credentials by way of a proxy SIM card.

A bus 710 includes one or more parallel conductors of information so that information is transferred quickly among devices coupled to the bus 710. One or more processors 702 for processing information are coupled with the bus 710.

A processor (or multiple processors) 702 performs a set of operations on information as specified by computer program code related to access multiple SIM credentials by way of a proxy SIM card. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or any other dynamic storage device, stores information including processor instructions for accessing multiple SIM credentials by way of a proxy SIM card. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or any other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for accessing multiple SIM credentials by way of a proxy SIM card, is provided to the bus 710 for use by the processor from an external input device 712, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT), a liquid crystal display (LCD), a light emitting diode (LED) display, an organic LED (OLED) display, a plasma screen, or a printer for presenting text or images, and a pointing device 716, such as a mouse, a trackball, cursor direction keys, or a motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of ASICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 105 for accessing multiple SIM credentials by way of a proxy SIM card to the UE 101.

The term "computer-readable medium" as used herein refers to any medium that participates in providing information to processor 702, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 708. Volatile media include, for example, dynamic memory 704. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 720.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system 700 can be deployed in various configurations within other computer systems, e.g., host 782 and server 792.

At least some embodiments of the invention are related to the use of computer system 700 for implementing some or all of the techniques described herein. According to one embodiment of the invention, those techniques are performed by computer system 700 in response to processor 702 executing one or more sequences of one or more processor instructions contained in memory 704. Such instructions, also called computer instructions, software and program code, may be read into memory 704 from another computer-readable medium such as storage device 708 or network link 778. Execution of the sequences of instructions contained in memory 704 causes processor 702 to perform one or more of the method steps described herein. In alternative embodiments, hardware, such as ASIC 720, may be used in place of or in combination with software to implement the invention. Thus, embodiments of the invention are not limited to any specific combination of hardware and software, unless otherwise explicitly stated herein.

The signals transmitted over network link 778 and other networks through communications interface 770, carry information to and from computer system 700. Computer system 700 can send and receive information, including program code, through the networks 780, 790 among others, through network link 778 and communications interface 770. In an example using the Internet 790, a server host 792 transmits program code for a particular application, requested by a message sent from computer 700, through Internet 790, ISP equipment 784, local network 780 and communications interface 770. The received code may be executed by processor 702 as it is received, or may be stored in memory 704 or in storage device 708 or any other non-volatile storage for later execution, or both. In this manner, computer system 700 may obtain application program code in the form of signals on a carrier wave.

Various forms of computer readable media may be involved in carrying one or more sequence of instructions or data or both to processor 702 for execution. For example, instructions and data may initially be carried on a magnetic disk of a remote computer such as host 782. The remote computer loads the instructions and data into its dynamic memory and sends the instructions and data over a telephone line using a modem. A modem local to the computer system 700 receives the instructions and data on a telephone line and uses an infra-red transmitter to convert the instructions and data to a signal on an infra-red carrier wave serving as the network link 778. An infrared detector serving as communications interface 770 receives the instructions and data carried in the infrared signal and places information representing the instructions and data onto bus 710. Bus 710 carries the information to memory 704 from which processor 702 retrieves and executes the instructions using some of the data sent with the instructions. The instructions and data received in memory 704 may optionally be stored on storage device 708, either before or after execution by the processor 702.

FIG. 8 illustrates a chip set or chip 800 upon which an embodiment of the invention may be implemented. Chip set 800 is programmed to access multiple SIM credentials by way of a proxy SIM card as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 800 can be implemented in a single chip. It is further contemplated that in certain embodiments the chip set or chip 800 can be implemented as a single "system on a chip." It is further contemplated that in certain embodiments a separate ASIC would not be used, for example, and that all relevant functions as disclosed herein would be performed by a processor or processors. Chip set or chip 800, or a portion thereof, constitutes a means for performing one or more steps of providing user interface navigation information associated with the availability of functions. Chip set or chip 800, or a portion thereof, constitutes a means for performing one or more steps of accessing multiple SIM credentials by way of a proxy SIM card.

In one embodiment, the chip set or chip 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 800 includes merely one or more processors and some software and/or firmware supporting and/or relating to and/or for the one or more processors.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to access multiple SIM credentials by way of a proxy SIM card. The memory 805 also stores the data associated with or generated by the execution of the inventive steps.

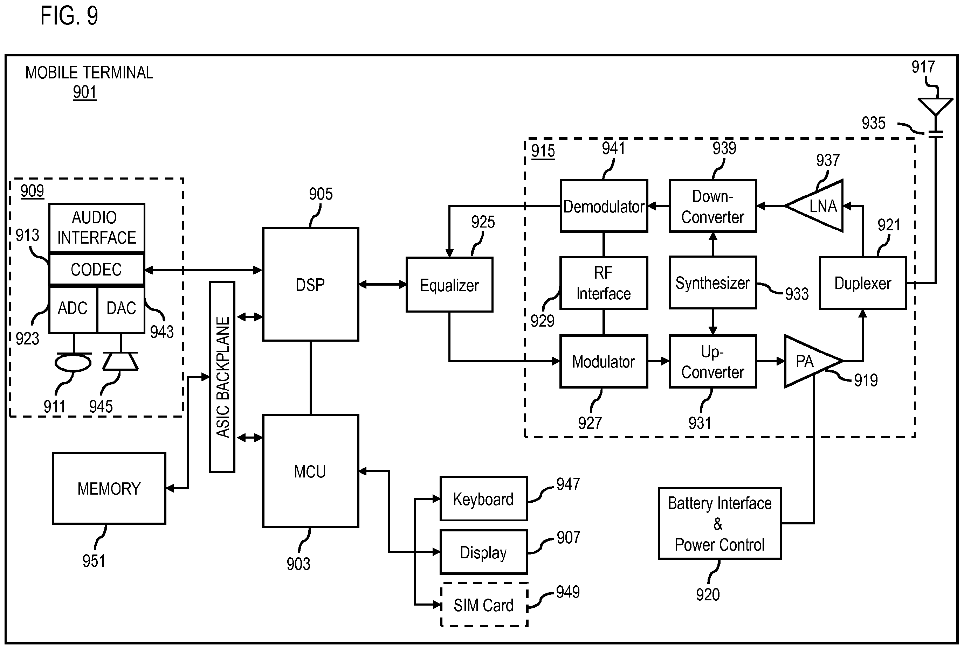

FIG. 9 is a diagram of exemplary components of a mobile terminal (e.g., handset) for communications, which is capable of operating in the system of FIG. 1, according to one embodiment. In some embodiments, mobile terminal 901, or a portion thereof, constitutes a means for performing one or more steps of accessing multiple SIM credentials by way of a proxy SIM card. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims.

As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile terminal functions that perform or support the steps of accessing multiple SIM credentials by way of a proxy SIM card. The display 907 includes display circuitry configured to display at least a portion of a user interface of the mobile terminal (e.g., mobile telephone). Additionally, the display 907 and display circuitry are configured to facilitate user control of at least some functions of the mobile terminal. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile terminal 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903 which can be implemented as a Central Processing Unit (CPU).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile terminal 901 to access multiple SIM credentials by way of a proxy SIM card. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the terminal. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile terminal 901. The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable storage medium known in the art. The memory device 951 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 949 carries, for instance, important information, such as the cellular phone number, the carrier supplying service, subscription details, and security information. The SIM card 949 serves primarily to identify the mobile terminal 901 on a radio network. The card 949 also contains a memory for storing a personal telephone number registry, text messages, and user specific mobile terminal settings.

## Claims

1. A method performed by a first device (101a... 101n), the method comprising:
determining (301) an interface request directed to one or more proxy subscriber identity modules (111a...111n) associated with the first device (101a...101n);
causing (303) an establishment of a communication connection between the one or more proxy subscriber identity modules (111a...111n) and one or more primary subscriber identity modules (113a... 113n) associated with a second device (109) to cause a transfer of information responsive to the interface request from the one or more primary subscriber identity modules (113a... 113n) to the one or more proxy subscriber identity modules (111a...111n); and
**characterized in that** the transfer is for a pre-defined period of time so that the first device (101a... 101n) is enabled to be loaned credentials of the one or more primary subscriber identity modules (113a... 113n) from the second device (109) when the first device (101a... 101n) is out of range of the second device (109) during said pre-defined period of time, and wherein the information is information about the credentials.

2. A method of claim 1, wherein the communication connection is established via a communication stack associated with the one or more proxy subscriber identity modules (111a...111n) that are independent of one or more other communication stacks of the first device.

3. A method of claim 2, wherein the one or more proxy subscriber identity modules (111a...111n) and respective one or more components associated with the communication stack are mounted on one or more cards with connectivity to the first device.

4. A method of any of claims 1-3, further comprising:
causing (309), at least in part, a pairing of the one or more primary subscriber identity modules (113a... 113n) and the one or more proxy subscriber identity modules (111a...111n),
wherein the establishment of the communication connection is based, at least in part, on the pairing.

5. A method of claim 4, wherein the pairing is performed on (a) a manufacturing of the one or more primary subscriber identity modules (113a... 113n), the one or more proxy subscriber identity modules (111a...111n), or a combination thereof, (b) a provisioning of communication services associated with the one or more primary subscriber identity modules (113a... 113n), the one or more proxy subscriber identity modules (111a...111n), or a combination thereof, (c) a user request, or (d) a combination thereof.

6. A method of any of claims 1-5, further comprising:
determining (307) to select from among the one or more primary subscriber identity modules (113a... 113n) based, at least in part, on one or more default settings, one or more user preferences, or one or more user requests, or a combination thereof,
wherein the transfer of the information is from the one or more selected primary subscriber identity modules (113a... 113n).

7. A method of claim 6, further comprising:
causing (305) a generation of a user interface to determine the one or more default settings, the one or more user preferences, the one or more user requests, or a combination thereof.

8. An apparatus (107a... 107n) comprising means for at least performing a method of at least one of claims 1-7.

9. An apparatus of claim 8, wherein the apparatus is a mobile phone (101a...101n) further comprising:
user interface circuitry and user interface software configured to facilitate user control of at least some functions of the mobile phone through use of a display and configured to respond to user input; and
a display and display circuitry configured to display at least a portion of a user interface of the mobile phone, the display and display circuitry configured to facilitate user control of at least some functions of the mobile phone.

10. A system comprising:
an apparatus according to any of claims 8 to 9; and
the second device, wherein the second device includes the one or more primary subscriber identity modules (113a... 113n), and wherein the second device includes a mobile device, a holder device, or a combination thereof.

11. A computer-readable storage medium carrying one or more sequences of one or more instructions which, when executed by one or more processors, cause an apparatus to at least perform a method of at least one of claims 1-7.

## Patentansprüche

1. Verfahren das von einer ersten Vorrichtung (101a...101n) durchgeführt wird, wobei das Verfahren Folgendes umfasst:
Bestimmen (301) einer Schnittstellenanforderung, die an ein oder mehrere Proxyteilnehmeridentitätsmodule (111a...111n) gerichtet ist, die mit der ersten Vorrichtung (101a...101n) verknüpft sind;
Veranlassen (303) eines Aufbaus einer Kommunikationsverbindung zwischen dem einen oder den mehreren Proxyteilnehmeridentitätsmodulen (111a...111n) und einem oder mehreren Primärteilnehmeridentitätsmodulen (113a...113n), die mit einer zweiten Vorrichtung (109) verknüpft sind, um eine Übertragung von Informationen in Reaktion auf die Schnittstellenanforderung von dem einen oder den mehreren Primärteilnehmeridentitätsmodulen (113a...113n) zu dem einen oder den mehreren Proxyteilnehmeridentitätsmodulen (111a...111n) zu veranlassen; und
**dadurch gekennzeichnet, dass** die Übertragung für eine vordefinierte Zeitperiode ist, derart, dass es der ersten Vorrichtung (101a...101n) ermöglicht wird, Zugangsdaten des einen oder der mehreren Primärteilnehmeridentitätsmodule (113a...113n) von der zweiten Vorrichtung (109) geliehen zu bekommen, wenn sich die erste Vorrichtung (101a ... 101n) während der vordefinierten Zeitperiode außerhalb der Reichweite der zweiten Vorrichtung (109) befindet, und wobei die Informationen Informationen über die Zugangsdaten sind.

2. Verfahren nach Anspruch 1, wobei die Kommunikationsverbindung via einen Kommunikationsstapel aufgebaut wird, der mit dem einen oder den mehreren Proxyteilnehmeridentitätsmodulen (111a...111n) verknüpft ist, die von einem oder mehreren anderen Kommunikationsstapeln der ersten Vorrichtung unabhängig sind.

3. Verfahren nach Anspruch 2, wobei das eine oder die mehreren Proxyteilnehmeridentitätsmodule (111a...111n) und eine oder mehrere jeweilige Komponenten, die mit dem Kommunikationsstapel verknüpft sind, auf einer oder mehreren Karten mit Konnektivität zur ersten Vorrichtung montiert sind.

4. Verfahren nach einem der Ansprüche 1 bis 3, das ferner Folgendes umfasst:
mindestens teilweises Veranlassen (309) einer Paarung des einen oder der mehreren Primärteilnehmeridentitätsmodule (113a...113n) und des einen oder der mehreren Proxyteilnehmeridentitätsmodule (111a...111n),
wobei das Aufbauen der Kommunikationsverbindung mindestens teilweise auf der einen Paarung basiert.

5. Verfahren nach Anspruch 4, wobei die Paarung nach (a) einer Herstellung des einen oder der mehreren Primärteilnehmeridentitätsmodule (113a...113n), des einen oder der mehreren Proxyteilnehmeridentitätsmodule (111a...111n) oder einer Kombination davon, (b) einer Bereitstellung von Kommunikationsdiensten, die mit dem einen oder den mehreren Primärteilnehmeridentitätsmodulen (113a...113n), dem einen oder den mehreren Proxyteilnehmeridentitätsmodulen (111a...111n) oder einer Kombination davon verknüpft sind, (c) einer Benutzeranforderung oder (d) einer Kombination davon durchgeführt wird.

6. Verfahren nach einem der Ansprüche 1 bis 5, das ferner Folgendes umfasst:
Bestimmen (307), aus dem einen oder den mehreren Primärteilnehmeridentitätsmodulen (113a...113n) mindestens teilweise auf Basis von einer oder mehreren Standardeinstellungen, einer oder mehreren Benutzerpräferenzen oder einer oder mehreren Benutzeranforderungen oder einer Kombination davon auszuwählen,
wobei die Übertragung der Informationen von dem einen oder den mehreren ausgewählten Primärteilnehmeridentitätsmodulen (113a...113n) erfolgt.

7. Verfahren nach Anspruch 6, das ferner Folgendes umfasst:
Veranlassen (305) einer Erzeugung einer Benutzerschnittstelle, um die eine oder die mehreren Standardeinstellungen, die eine oder die mehreren Benutzerpräferenzen, die eine oder die mehreren Benutzeranforderungen oder eine Kombination davon zu bestimmen.

8. Einrichtung (107a...107n), die Mittel zum mindestens Durchführen eines Verfahrens nach mindestens einem der Ansprüche 1 bis 7 umfasst.

9. Einrichtung nach Anspruch 8, wobei die Einrichtung ein Mobiltelefon (101a...101n) ist, das ferner Folgendes umfasst:
eine Benutzerschnittstellenschaltung und Benutzerschnittstellensoftware, die dazu ausgelegt sind, eine Benutzersteuerung von mindestens einigen Funktionen des Mobiltelefons mittels der Verwendung einer Anzeige zu ermöglichen, und dazu ausgelegt, auf eine Benutzereingabe zu reagieren; und
eine Anzeige und eine Anzeigeschaltung, die dazu ausgelegt sind, mindestens einen Abschnitt einer Benutzerschnittstelle des Mobiltelefons anzuzeigen, wobei die Anzeige und die Anzeigeschaltung dazu ausgelegt sind, eine Benutzersteuerung von mindestens einigen Funktionen des Mobiltelefons zu ermöglichen.

10. System, das Folgendes umfasst:
eine Einrichtung nach einem der Ansprüche 8 bis 9; und
die zweite Vorrichtung, wobei die zweite Vorrichtung das eine oder die mehreren Primärteilnehmeridentitätsmodule (113a...113n) beinhaltet, und wobei die zweite Vorrichtung eine mobile Vorrichtung, eine Haltervorrichtung oder eine Kombination davon beinhaltet.

11. Computerlesbares Speichermedium, auf dem sich eine oder mehrere Folgen von einer oder mehreren Anweisungen befinden, die, wenn sie von einem oder mehreren Prozessoren ausgeführt werden, eine Einrichtung veranlassen, mindestens ein Verfahren nach einem der Ansprüche 1 bis 7 durchzuführen.

## Revendications

1. Procédé effectué par un premier dispositif (101a... 101n), le procédé comprenant :
la détermination (301) d'une demande d'interface adressée à un ou plusieurs modules d'identification d'abonné mandataires (111a... 111n) associés au premier dispositif (101a... 101n) ;
la provocation (303) de l'établissement d'une connexion de communication entre les un ou plusieurs modules d'identification d'abonné mandataires (111a... 111n) et un ou plusieurs modules d'identification d'abonné primaires (113a... 113n) associés à un deuxième dispositif (109), pour provoquer un transfert d'informations en réponse à la demande d'interface des un ou plusieurs modules d'identification d'abonné primaires (113a... 113n) aux un ou plusieurs modules d'identification d'abonné mandataires (111a... 111n) ; et
**caractérisé en ce que** le transfert se fait pendant une période de temps prédéfinie, de sorte que le premier dispositif (101a... 101n) puisse se voir prêter des authentifiants des un ou plusieurs modules d'identification d'abonné primaires (113a... 113n) du deuxième dispositif (109) lorsque le premier dispositif (101a... 101n) est hors de portée du deuxième dispositif (109) pendant ladite période de temps prédéfinie, et dans lequel les informations sont des informations sur les authentifiants.

2. Procédé de la revendication 1, dans lequel la connexion de communication est établie via une pile de communications associées aux un ou plusieurs modules d'identification d'abonné mandataires (111a... 111n) qui sont indépendants d'une ou plusieurs autres piles de communications du premier dispositif.

3. Procédé de la revendication 2, dans lequel les un ou plusieurs modules d'identification d'abonné mandataires (111a... 111n) et un ou plusieurs composants respectifs associés à la pile de communications sont montés sur une ou plusieurs cartes avec une connectivité au premier dispositif.

4. Procédé de l'une des revendications 1 à 3, comprenant en outre :
la provocation (309), au moins en partie, de l'appariement des un ou plusieurs modules d'identification d'abonné primaires (113a... 113n) et des un ou plusieurs modules d'identification d'abonné mandataires (111a... 111n), dans lequel l'établissement de la connexion de communication est basé au moins en partie sur l'appariement.

5. Procédé de la revendication 4, dans lequel l'appariement est effectué sur (a) fabrication des un ou plusieurs modules d'identification d'abonné primaires (113a... 113n), des un ou plusieurs modules d'identification d'abonné mandataires (111a... 111n) ou d'une combinaison de ceux-ci, (b) fourniture de services de communication associés aux un ou plusieurs modules d'identification d'abonné primaires (113a... 113n), aux un ou plusieurs modules d'identification d'abonné mandataires (11la...11In) ou à une combinaison de ceux-ci, (c) une demande utilisateur ou (d) une combinaison de ceux-ci.

6. Procédé de l'une des revendications 1 à 5, comprenant en outre :
la détermination (307) d'une sélection parmi les un ou plusieurs modules d'identification d'abonné primaires (113a... 113n) en se basant au moins en partie sur un ou plusieurs paramètres par défaut, une ou plusieurs préférences utilisateur, ou une ou plusieurs demandes utilisateur ou une combinaison de ceux-ci,
dans lequel le transfert des informations se fait à partir des un ou plusieurs modules d'identification d'abonné primaires (113a... 113n) sélectionnés.

7. Procédé de la revendication 6, comprenant en outre :
la provocation (305) de la génération d'une interface utilisateur afin de déterminer les un ou plusieurs paramètres par défaut, les une ou plusieurs préférences utilisateur, les une ou plusieurs demandes utilisateur ou une combinaison de ceux-ci.

8. Appareil (107a... 107n) comprenant des moyens pour effectuer au moins un procédé d'au moins l'une des revendications 1 à 7.

9. Appareil de la revendication 8, dans lequel l'appareil est un téléphone mobile (101a... 101n) comprenant en outre :
une circuiterie d'interface utilisateur et un logiciel d'interface utilisateur configurés pour faciliter une commande utilisateur d'au moins certaines fonctions du téléphone mobile par l'intermédiaire d'un affichage, et configurés pour répondre à une entrée utilisateur ; et
un affichage et une circuiterie d'affichage configurés pour afficher au moins une partie d'une interface utilisateur du téléphone mobile, l'affichage et la circuiterie d'affichage étant configurés pour faciliter une commande utilisateur d'au moins certaines fonctions du téléphone mobile.

10. Système comprenant :
un appareil selon l'une des revendications 8 et 9 ; et
le deuxième dispositif, dans lequel le deuxième dispositif comporte les un ou plusieurs modules d'identification d'abonné primaires (113a... 113n), et dans lequel le deuxième dispositif comporte un dispositif mobile, un dispositif de support ou une combinaison de ceux-ci.

11. Support de stockage lisible par ordinateur contenant une ou plusieurs séquences d'une ou plusieurs instructions qui, lorsqu'elles sont exécutées par un ou plusieurs processeurs, amènent un appareil à effectuer au moins un procédé d'au moins l'une des revendications 1 à 7.
